# EUROPEAN PATENT APPLICATION

(11) **EP 4 738 503 A1**
(43) Date of publication of application: **06.05.2026**
(21) Application number: 23942970.7
(22) Date of filing: 30.06.2023
(51) Int. Cl.: H01M 10/0525, H01M 10/0567, H01M 4/133

(54) **ELECTROCHEMICAL DEVICE AND ELECTRONIC DEVICE**

(71) Applicant: Ningde Amperex Technology Limited, Ningde, Fujian 352100 (CN)
(72) Inventor: ZHENG, Zigui, Ningde, Fujian 352100 (CN); YI, Zheng, Ningde, Fujian 352100 (CN); SHAO, Wenlong, Ningde, Fujian 352100 (CN); XIE, Yuansen, Ningde, Fujian 352100 (CN)
(74) Representative: Kraus & Lederer PartGmbB
(86) International application number: PCT/CN2023/104778
(87) International publication number: WO 2025/000468

(57) **Abstract**

The present application relates to an electrochemical device and an electronic device. The electrochemical device of the present application includes a positive electrode, a negative electrode, and an electrolyte. The electrolyte includes an additive, where the additive includes a first additive M, and the first additive M is at least one selected from the group consisting of a fluorinated carbonate compound and a compound containing a sulfur-oxygen double bond. The negative electrode includes a negative electrode active material layer, where the negative electrode active material layer includes a negative electrode active material, and the negative electrode active material includes a hard carbon material. The electrochemical device of the present application has improved high-temperature cycling performance, low-temperature performance, and rate performance while maintaining the specific capacity of the negative electrode active material.

## Description

### TECHNICAL FIELD

The present application relates to the field of energy storage, and in particular, to an electrochemical device and an electronic device.

### BACKGROUND

With the widespread application of electrochemical devices, various types of batteries have been developed. A sodium-ion battery is a new type of rechargeable energy storage device, and its basic working principle is similar to that of a lithium-ion battery. Compared to traditional lithium-ion batteries, sodium-ion batteries have certain advantages in terms of cost, rate performance, low-temperature performance, and cycle life. Additionally, sodium-ion batteries offer higher safety. Currently, sodium-ion batteries have attracted widespread attention and have broad application prospects in fields such as electric vehicles and energy storage systems.

Graphite materials are widely used as negative electrode active materials in lithium-ion batteries. However, due to the thermodynamic instability of compounds formed by graphite material and sodium, and the larger ionic radius of sodium ions, both of which prevent reversible intercalation/deintercalation in graphite layers, traditional graphite cannot be used as a negative electrode active material for sodium-ion batteries. Among the many negative electrode active materials for sodium-ion batteries under development, hard carbon materials have gained significant attention due to their high specific capacity and excellent rate performance, good low-temperature performance, and favorable cycle performance. Moreover, the precursors for hard carbon materials are widely available, common biomass materials, coal-based materials, pitch-based materials, and resin materials all serve as precursors for hard carbon materials, and these precursors are cost-effective. The heat treatment process for hard carbon materials also consumes less energy than that for graphite materials, and the cost advantages of raw materials and processing further enhance the cost-effectiveness of sodium-ion batteries.

Hard carbon materials have a larger interlayer spacing, which facilitates the intercalation/deintercalation of sodium ions, thereby increasing the sodium-ion diffusion rate. Additionally, the presence of numerous pore defects within hard carbon materials allows for high sodium storage capacity, making them the most ideal negative electrode material for sodium-ion batteries at present. From the perspective of the sodium storage mechanism, the majority of the sodium storage capacity of hard carbon is achieved through filling at low potentials. These low potentials are close to the sodium deposition potential, which easily leads to sodium deposition. This not only causes irreversible capacity decay but may also result in gas generation and safety issues in electrochemical devices.

Therefore, there is indeed a need to provide an improved electrochemical device using hard carbon as the negative electrode active material.

### SUMMARY

The purpose of the present application is to provide an electrochemical device and an electronic device, where the electrochemical device of the present application has improved high-temperature cycling performance, low-temperature performance, and rate performance while maintaining the specific capacity of the negative electrode active material. The specific technical solution is as follows:

In one embodiment, the present application provides an electrochemical device including a positive electrode, a negative electrode, and an electrolyte; where the electrolyte includes an additive, where the additive includes a first additive M, the first additive M is at least one selected from the group consisting of a fluorinated carbonate compound and a compound containing a sulfur-oxygen double bond, and based on a mass of the electrolyte, a mass percentage of the first additive M is m%; the negative electrode includes a negative electrode active material layer, where the negative electrode active material layer includes a negative electrode active material, and the negative electrode active material includes a hard carbon material; as measured by Raman spectroscopy, a peak intensity of the hard carbon material at 1300 cm⁻¹ to 1400 cm⁻¹ is ID, a peak intensity of the hard carbon material at 1550 cm⁻¹ to 1650 cm⁻¹ is IG, a ratio of ID/IG is d, d ranges from 1.0 to 1.6, and m/d ranges from 0.01 to 4.5. In some embodiments, the electrochemical device satisfies at least one of the following conditions: (1) m/d ranges from 1.6 to 3.6; or (2) d ranges from 1.2 to 1.4.

In some embodiments, as measured by X-ray diffraction, a crystal plane spacing d002 of the hard carbon material ranges from 0.37 nm to 0.41 nm. In some embodiments, the crystal plane spacing d002 ranges from 0.38 nm to 0.40 nm.

In some embodiments, the electrochemical device satisfies at least one of the following conditions:
(1) based on the mass of the electrolyte, a mass percentage of the fluorinated carbonate compound ranges from 0.05% to 5%; or
(2) based on the mass of the electrolyte, a mass percentage of the compound containing a sulfur-oxygen double bond ranges from 0.05% to 4%.

In some embodiments, the compound containing a sulfur-oxygen double bond includes at least one of 1,3-propane sultone, propenyl-1,3-sultone, 1,2-propane sultone, 1,4-butane sultone, or vinyl sulfate, and/or the fluorinated carbonate compound includes at least one of fluoroethylene carbonate or difluoroethylene carbonate.

In some embodiments, the hard carbon material has pores , a pore diameter of the pores ranges from 0.6 nm to 2.0 nm, and as measured by nitrogen adsorption, a pore volume of the pores is less than 0.05 cc/g.

In some embodiments, the hard carbon material satisfies at least one of the following conditions:
(1) a specific surface area of the hard carbon material ranges from 0.5 m²/g to 10 m²/g;
(2) a compacted density of the hard carbon material under a pressure of 5 tons ranges from 0.8 g/cc to 1.6 g/cc;
(3) as measured by X-ray diffraction, the hard carbon material has a diffraction peak in a range of 18° to 30°, and a full width at half maximum of the diffraction peak ranges from 4° to 12°; or
(4) Dᵥ50 of the hard carbon material ranges from 2 µm to 10 µm, and Dᵥ50 and Dᵥ90 of the hard carbon material satisfy: 2 ≤ Dᵥ90/Dᵥ50 ≤ 5.

In some embodiments, the negative electrode active material layer satisfies at least one of the following conditions:
(1) a porosity of the negative electrode active material layer ranges from 30% to 60%; or
(2) a compacted density of the negative electrode active material layer ranges from 0.8 g/cc to 1.5 g/cc.

In some embodiments, a capacity per unit area of the negative electrode active material layer is V1, the positive electrode includes a positive electrode active material layer, a capacity per unit area of the positive electrode active material layer is V2, and V1/V2 ranges from 1.1 to 1.5.

In some embodiments, the electrochemical device is a sodium-ion battery.

In another embodiment, the present application provides an electronic device including the electrochemical device according to embodiments of the present application.

The present application significantly improves the high-temperature cycling performance, low-temperature performance, and rate performance of the electrochemical device (especially a sodium-ion battery) by using hard carbon in combination with a specific electrolyte and controlling their proportions.

Additional aspects and advantages of some embodiments of the present application will be partially described, shown, or explained through the implementation of these embodiments of the present application.

### DESCRIPTION OF EMBODIMENTS

Some embodiments of the present application will be described in detail below. These embodiments of the present application should not be construed as limiting the present application.

As used in the present application, the term "approximation" is used to describe and account for small variations. When used in conjunction with an event or circumstance, this term may refer to instances where the event or circumstance occurs precisely as well as instances where the event or circumstance occurs to a close approximation. For example, when used in conjunction with a numerical value, this term may refer to a range of variation of less than or equal to ±10% of the numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%.

Additionally, amounts, ratios, and other numerical values are sometimes presented herein in a range format. It should be understood that such range formats are used for convenience and brevity and should be flexibly understood to include not only the numerical values explicitly specified as the limits of the range but also all individual numerical values or sub-ranges encompassed within that range as if each numerical value and sub-range is explicitly specified.

In the description of embodiments and claims, a list of items connected by the terms "one of," "one," "a," or other similar terms may mean any one of the listed items. For example, if items A and B are listed, the phrase "one of A and B" means only A or only B. In another example, if items A, B, and C are listed, the phrase "one of A, B, and C" means only A, only B, or only C. Item A may include a single element or multiple elements. Item B may include a single element or multiple elements. Item C may include a single element or multiple elements.

In the description of embodiments and claims, a list of items connected by the terms "at least one of," "at least one," "at least one kind of," or other similar terms may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (excluding C); A and C (excluding B); B and C (excluding A); or all of A, B, and C. Item A may include a single element or multiple elements. Item B may include a single element or multiple elements. Item C may include a single element or multiple elements.

### I. Electrochemical device

In some embodiments, the present application provides an electrochemical device, where the electrochemical device includes a positive electrode, a negative electrode, and an electrolyte.

In some embodiments, the electrolyte includes an additive, where the additive includes a first additive M, the first additive M is at least one selected from the group consisting of a fluorinated carbonate compound and a compound containing a sulfur-oxygen double bond, and based on a mass of the electrolyte, a mass percentage of the first additive M is m%. The negative electrode includes a negative electrode active material layer, where the negative electrode active material layer includes a negative electrode active material, the negative electrode active material includes a hard carbon material, and as measured by Raman spectroscopy, a peak intensity of the hard carbon material at 1300 cm⁻¹ to 1400 cm⁻¹ is ID, a peak intensity of the hard carbon material at 1550 cm⁻¹ to 1650 cm⁻¹ is IG, a ratio of ID/IG is d, d ranges from 1.0 to 1.6, and m/d ranges from 0.01 to 4.5.

In some embodiments, m/d ranges from 0.01 to 4.5. In some embodiments, m/d ranges from 1.6 to 3.6. In some embodiments, m/d is 0.01, 0.05, 0.1, 0.5, 1, 1.5, 2, 2.5, 3, 3.5, 4, 4.5, or a value within a range defined by any two of these values.

In some embodiments, m ranges from 1 to 10. In some embodiments, m is 1, 2, 3, 4, 5, 6, 7, 8, 9, 10, or a value within a range defined by any two of these values.

In some embodiments, d ranges from 1.2 to 1.4. In some embodiments, d is 1.0, 1.1, 1.2, 1.3, 1.4, 1.5, 1.6, or a value within a range defined by any two of these values.

When the ratio d of ID/IG of the hard carbon material is within the above range, the hard carbon material has a high defect content, which may be caused by the disordered microcrystalline structure of the hard carbon material or by micropore defects within the hard carbon material. A high defect content can provide more sodium-ion adsorption sites, thereby enhancing the fast charge-discharge capability of the material. Therefore, when the hard carbon material of the present application is used as the negative electrode active material in an electrochemical device, it enables the electrochemical device to exhibit excellent kinetic performance.

Moreover, some embodiments of the present application provide an electrolyte matched with the above high-kinetic hard carbon material. The electrolyte contains a first additive M, where the first additive M is at least one selected from the group consisting of a fluorinated carbonate compound and a compound containing a sulfur-oxygen double bond. During the first charge-discharge cycle, a solid electrolyte interface (that is, SEI) film forms on the surface of the negative electrode active material in a sodium-ion battery, and a structurally stable SEI film is critical for stable cycling of sodium ions. By selecting the composition and content of additives in the electrolyte system, the SEI film can be regulated to have a uniform, dense, and thin structure, which can isolate the electrolyte from further decomposition and broaden the actual electrochemical window of the electrolyte. The strong electron-withdrawing effect of fluorine atoms in fluorinated carbonate compounds can enhance the electron-donating ability of the central atom, allowing reduction at a higher potential (-0.7 V) on the negative electrode surface to form a stable SEI film, and further preventing the decomposition of carbonate compounds on the active material surface. The compound additive containing sulfur-oxygen double bonds have a similar effect; and due to the higher electronegativity of sulfur atoms compared to carbon atoms, they are preferentially reduced on the negative electrode surface over carbonate compounds with similar structures, forming a stable element sulfur-rich SEI film, which can improve the high- and low-temperature performance of the electrochemical device and reduce the interface impedance.

Furthermore, the inventors of the present application have found that the surface defects and defect content of the hard carbon active material also affect the formation and structural stability of the SEI film. Due to the higher reactivity of defects, they can induce the formation of the SEI film and affect its stability. Therefore, the selection of the content of the additive in the electrolyte for sodium-ion battery systems needs to further consider the surface defect content of the hard carbon active material. The inventors of the present application have found that when the range of m/d, where d is the ratio ID/IG in the Raman spectrum of the hard carbon material, and m% is the mass percentage of the first additive M, is within the above range, the SEI film formed can effectively increase the sodium-ion transfer rate, thereby improving the kinetic performance, low-temperature performance, and cycling performance of the sodium-ion battery while maintaining the specific capacity of the negative electrode active material.

In some embodiments, as measured by X-ray diffraction, a crystal plane spacing d002 of the hard carbon material ranges from 0.37 nm to 0.41 nm. In some embodiments, the crystal plane spacing d002 of the hard carbon material ranges from 0.38 nm to 0.40 nm. In some embodiments, the crystal plane spacing d002 of the hard carbon material is 0.37 nm, 0.38 nm, 0.39 nm, 0.40 nm, 0.41 nm, or a value within a range defined by any two of these values. When the crystal plane spacing d002 of the hard carbon material is within the above range, a relatively large 002 crystal plane spacing facilitates rapid transport of sodium ions within the hard carbon material, thereby improving the reversible capacity and kinetic performance of the hard carbon material when used as a negative electrode active material. In some embodiments, when the crystal plane spacing d002 ranges from 0.38 nm to 0.40 nm, the kinetic performance of the hard carbon material can be further improved.

In some embodiments, based on the mass of the electrolyte, a mass percentage of the fluorinated carbonate compound ranges from 0.05% to 5%. In some embodiments, the mass percentage of the fluorinated carbonate compound is 0.05%, 0.3%, 0.5%, 1%, 1.5%, 2%, 2.5%, 3%, 3.5%, 4%, 5%, or a value within a range defined by any two of these values.

In some embodiments, based on the mass of the electrolyte, a mass percentage of the compound containing a sulfur-oxygen double bond ranges from 0.05% to 4%. In some embodiments, the mass percentage of the compound containing a sulfur-oxygen double bond is 0.05%, 0.3%, 0.5%, 1%, 1.5%, 2%, 2.5%, 3%, 3.5%, 4%, or a value within a range defined by any two of these values.

The inventors of the present application have found that when the mass percentage of the fluorinated carbonate compound additive in the electrolyte system ranges from 0.05% to 5%, and/or the mass percentage of the compound additive containing sulfur-oxygen double bonds ranges from 0.05% to 4%, the SEI film formed has an appropriate thickness and stable structure.

In some embodiments, the compound containing a sulfur-oxygen double bond includes at least one of 1,3-propane sultone, propenyl-1,3-sultone, 1,2-propane sultone, 1,4-butane sultone, or vinyl sulfate.

In some embodiments, the fluorinated carbonate compound includes at least one of fluoroethylene carbonate or difluoroethylene carbonate.

In some embodiments, the hard carbon material has pores, a pore diameter of the pores ranges from 0.6 nm to 2.0 nm, and as measured by nitrogen adsorption, a pore volume of the pores is less than 0.05 cc/g.

In some embodiments, the pore diameter is 0.6 nm, 0.8 nm, 1.0 nm, 1.2 nm, 1.4 nm, 1.6 nm, 1.8 nm, 2.0 nm, or a value within a range defined by any two of these values.

In some embodiments, the pore volume is 0.01 cc/g, 0.02 cc/g, 0.03 cc/g, 0.04 cc/g, 0.05 cc/g, or a value within a range defined by any two of these values.

The hard carbon material described in the present application has a rich pore structure. When the hard carbon material has a pore structure with the above pore diameter range, sodium ions can be stored in the micropores during sodium storage, thereby providing a high reversible capacity. In some embodiments, when the hard carbon material is used in an electrochemical device with metallic sodium as the counter electrode, the specific capacity of the hard carbon material ranges from 200 mAh/g to 1000 mAh/g. Therefore, when the hard carbon material of the present application is used as the negative electrode active material in a sodium-ion battery, it enables the sodium-ion battery to have a high energy density. When the pore volume is within the above range, the content of open pore structures or externally connected pores on the material surface is low.

In some embodiments, a specific surface area of the hard carbon material ranges from 0.5 m²/g to 10 m²/g. In some embodiments, the specific surface area of the hard carbon material is 0.5 m²/g, 1 m²/g, 1.5 m²/g, 2 m²/g, 2.5 m²/g, 3 m²/g, 3.5 m²/g, 4 m²/g, 4.5 m²/g, 5 m²/g, 5.5 m²/g, 6 m²/g, 7 m²/g, 8 m²/g, 9 m²/g, 10 m²/g, or a value within a range defined by any two of these values.

When the specific surface area of the hard carbon material is within the above range, it allows the SEI film formed during the first charging process of the electrochemical device to have an appropriate surface area while reducing the amount of binder used in the negative electrode active material layer. This can reduce the loss of active ions and the internal resistance of the negative electrode active material layer, thereby improving the initial coulombic efficiency, cycling performance, and safety performance of the electrochemical device.

In some embodiments, a compacted density of the hard carbon material under a pressure of 5 tons ranges from 0.8 g/cc to 1.6 g/cc. In some embodiments, the compacted density of the hard carbon material under a pressure of 5 tons is 0.8 g/cc, 1.0 g/cc, 1.2 g/cc, 1.4 g/cc, 1.6 g/cc, or a value within a range defined by any two of these values. It is foreseeable that an appropriate particle size distribution of the active material contributes to improving the powder compacted density of the material. From the perspective of the active material itself, the density of the active material primarily depends on the disordered arrangement of microcrystalline layers and the presence of numerous pore defects within the material. Due to the rich pore defects for sodium storage in the hard carbon material, the powder compacted density of the hard carbon material is significantly lower than that of graphite materials. When the compacted density of the hard carbon material under a pressure of 5 tons is within the above range, the hard carbon material has a high powder compacted density.

In some embodiments, as measured by X-ray diffraction, the hard carbon material has a diffraction peak in a range of 18° to 30°, and a full width at half maximum of the diffraction peak ranges from 4° to 12°. In some embodiments, the full width at half maximum of the diffraction peak is 4°, 5°, 6°, 7°, 8°, 9°, 10°, 11°, 12°, or a value within a range defined by any two of these values.

In some embodiments, Dᵥ50 of the hard carbon material ranges from 2 µm to 10 µm. In some embodiments, the Dᵥ50 of the hard carbon material is 2 µm, 3 µm, 4 µm, 5 µm, 6 µm, 7 µm, 8 µm, 9 µm, 10 µm, or a value within a range defined by any two of these values. When the volume median particle size of the hard carbon material is within the above range, the hard carbon material is allowed to have excellent electrolyte wettability and also have a smaller specific surface area, thereby reducing the active ions consumed due to SEI film formation on the surface of the hard carbon material during the first charging process. Therefore, when the hard carbon material of the present application is used as the negative electrode active material in an electrochemical device, it enables the electrochemical device to have both excellent kinetic performance and high initial coulombic efficiency. In some embodiments, the Dᵥ50 and Dᵥ90 of the hard carbon material satisfy: 2 ≤ Dᵥ90/Dᵥ50 ≤ 5. In some embodiments, the ratio Dᵥ90/Dᵥ50 of the hard carbon material is 2, 3, 4, 5, or a value within a range defined by any two of these values. When the ratio of Dᵥ50 to Dᵥ90 of the hard carbon material is within the above range, an appropriate particle size distribution helps increase the compacted density of the active material layer, enhances particle-to-particle contact after cold pressing of the active material layer, and effectively increases the porosity of the active material layer. Additionally, close contact between particles helps reduce the impedance of the electrode and improve the kinetic performance of the electrochemical device. Furthermore, an appropriate particle size distribution also improves the processability of the active material layer and effectively increases the thickness of the active material layer, further increasing the energy density of the electrochemical device.

In some embodiments, Dᵥ90 of the hard carbon material ranges from 5 µm to 50 µm. In some embodiments, the Dᵥ90 of the hard carbon material is 5 µm, 10 µm, 15 µm, 20 µm, 25 µm, 30 µm, 35 µm, 40 µm, 45 µm, 50 µm, or a value within a range defined by any two of these values.

In some embodiments, a porosity of the negative electrode active material layer ranges from 30% to 60%. In some embodiments, the porosity of the negative electrode active material layer is 30%, 35%, 40%, 45%, 50%, 55%, 60%, or a value within a range defined by any two of these values.

In some embodiments, a compacted density of the negative electrode active material layer ranges from 0.8 g/cc to 1.5 g/cc. In some embodiments, the compacted density of the negative electrode active material layer is 0.8 g/cc, 0.9 g/cc, 1.0 g/cc, 1.1 g/cc, 1.2 g/cc, 1.3 g/cc, 1.4 g/cc, 1.5 g/cc, or a value within a range defined by any two of these values.

In some embodiments, a thickness of a single-sided negative electrode active material layer ranges from 50 µm to 120 µm. In some embodiments, the thickness of the negative electrode active material layer is 50 µm, 80 µm, 100 µm, 120 µm, or a value within a range defined by any two of these values.

In some embodiments, a capacity per unit area of the negative electrode active material layer is V1, the positive electrode includes a positive electrode active material layer, a capacity per unit area of the positive electrode active material layer is V2, and V1/V2 ranges from 1.1 to 1.5. In some embodiments, the range of V1/V2 is from 1.1 to 1.2. In some embodiments, V1/V2 is 1.1, 1.2, 1.3, 1.4, 1.5, or a value within a range defined by any two of these values. The sodium storage plateau potential of the hard carbon material is close to the sodium deposition potential, and slight increases in polarization during cycling may lead to sodium deposition, resulting in capacity loss, gas generation, or safety issues. To further reduce the possibility of sodium deposition, the capacity per unit area of the negative electrode active material layer should be slightly higher than that of the corresponding positive electrode active material layer. In the present application, when the ratio of the capacity per unit area of the negative electrode active material layer to that of the positive electrode active material layer is within the above range, it can reduce safety issues while effectively ensuring the energy density of the electrochemical device.

In some embodiments, the negative electrode of the present application includes a negative electrode current collector. In some embodiments, the negative electrode current collector of the present application is not particularly limited and may use a metal foil, a porous metal plate, or a composite current collector. The composite current collector may include a polymer base layer and a metal layer formed on at least one surface of the polymer base layer. The composite current collector may be formed by forming a metal material (such as copper, copper alloy, nickel, nickel alloy, titanium, titanium alloy, silver, or silver alloy) on a polymer base material (such as polypropylene (PP), polyethylene terephthalate (PET), polybutylene terephthalate (PBT), polystyrene (PS), or polyethylene (PE)). As an example, when the negative electrode is a negative electrode for a lithium-ion battery, the negative electrode current collector may be copper foil. As another example, when the negative electrode is a negative electrode for a sodium-ion battery, the negative electrode current collector may be copper foil or aluminum foil.

In some embodiments, the negative electrode current collector has two opposing surfaces in its thickness direction, and the negative electrode active material layer may be disposed on one surface of the negative electrode current collector or on both surfaces simultaneously. For example, the negative electrode current collector has two opposing surfaces in its thickness direction, and the negative electrode active material layer is disposed on either one or both of the opposing surfaces of the negative electrode current collector.

In some embodiments, the negative electrode active material layer optionally further includes a binder. The binder may be at least one selected from the group consisting of polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon.

In some embodiments, the negative electrode active material layer optionally further includes a conductive agent. The conductive agent may be selected from a carbon-based material, a metal-based material, a conductive polymer, or any combination thereof. As an example, the carbon-based material may be at least one selected from the group consisting of natural graphite, artificial graphite, superconducting carbon, acetylene black, carbon black, Ketjen black, carbon dots, carbon nanotubes, graphene, or carbon nanofibers. The metal-based material may be selected from metal powder and metal fibers. The conductive polymer may include a polyphenylene derivative.

In some embodiments, the negative electrode active material layer optionally further includes other additives, such as a thickener (for example, sodium carboxymethyl cellulose (CMC-Na)).

The negative electrode of the present application may be prepared according to conventional methods in the art. For example, the hard carbon and optional other negative electrode active materials, conductive agent, binder, and thickener are dispersed in a solvent, where the solvent may be N-methylpyrrolidone (NMP) or deionized water, to form a uniform negative electrode slurry. The negative electrode slurry is applied onto a negative electrode current collector, and after drying, cold pressing, and other processes, a negative electrode is obtained.

It should be noted that the parameters of the negative electrode active material layer provided in the present application refer to the parameter ranges of the negative electrode active material layer on a single surface. When the negative electrode active material layer is disposed on both surfaces of the negative electrode current collector, if the parameters of the negative electrode active material layer on either surface meet the protected range required by the present application, it is considered to fall within the scope of protection of the present application.

The negative electrode of the present application optionally includes additional functional layers besides the negative electrode active material layer. For example, in some embodiments, the negative electrode of the present application further includes a conductive undercoating layer (for example, composed of a conductive agent and a binder) sandwiched between the negative electrode current collector and the negative electrode active material layer and disposed on the surface of the negative electrode current collector. In other embodiments, the negative electrode of the present application further includes a protective layer covering the surface of the negative electrode active material layer.

In some embodiments, the present application provides a hard carbon material preparation method, where the preparation method includes:
(1). performing oxidation treatment on a precursor material at 100°C to 500°C for 100 minutes to 400 minutes to obtain an oxidized precursor material;
(2). subjecting the oxidized precursor material to pre-carbonization, pre-pyrolysis, and carbonization treatments to obtain a carbonized material, and classifying the carbonized material to obtain a precursor hard carbon material with corresponding Dᵥ50 and Dᵥ90 values; and
(3). performing surface coating on the precursor hard carbon material at 500°C to 1100°C for 5 hours to 15 hours.

In some embodiments, the precursor material in the above hard carbon preparation method may be a biomass material, resin material, sugar-based material, pitch-based material, or coal-based material. The biomass material includes, but is not limited to, lignin, cellulose, straw, coconut shell, or walnut shell. The resin material may be phenolic resin, furfural resin, epoxy resin, amide resin, or fluorine- or chlorine-containing resin. The sugar-based material may be glucose, magnesium gluconate, sodium gluconate, fructose, starch, maltose, or other sugar derivatives.

In some embodiments, the oxidation treatment temperature is 100°C, 200°C, 300°C, 400°C, 500°C, or a value within a range defined by any two of these values. In some embodiments, the oxidation treatment time is 100 min, 200 min, 300 min, 400 min, or a value within a range defined by any two of these values.

In some embodiments, the pre-carbonization temperature is 400°C to 700°C, and the pre-carbonization time is 1 hour to 4 hours. In some embodiments, the pre-carbonization temperature is 400°C, 500°C, 600°C, 700°C, or a value within a range defined by any two of these values.

In some embodiments, the pre-carbonization time is 1 hour, 2 hours, 3 hours, 4 hours, or a value within a range defined by any two of these values.

In some embodiments, the pre-pyrolysis temperature is 50°C to 200°C. In some embodiments, the pre-pyrolysis temperature is 50°C, 80°C, 100°C, 150°C, 180°C, 200°C, or a value within a range defined by any two of these values.

In some embodiments, the pre-pyrolysis time is 5 hours to 20 hours. In some embodiments, the pre-pyrolysis time is 5 hours, 8 hours, 10 hours, 12 hours, 14 hours, 20 hours, or a value within a range defined by any two of these values.

In some embodiments, the material after pre-pyrolysis treatment is subjected to crushing, screening, and impurity removal treatments. In some embodiments, the impurity removal method may involve washing with an acidic solution, where the acidic solution includes hydrochloric acid, sulfuric acid, nitric acid, hydrofluoric acid, or a mixed acid of the foregoing acids.

In some embodiments, the carbonization treatment temperature is 800°C to 1500°C. In some embodiments, the carbonization treatment temperature is 800°C, 1000°C, 1200°C, 1300°C, 1400°C, 1500°C, or a value within a range defined by any two of these values.

In some embodiments, the carbonization treatment time is 0.5 hours to 5 hours. In some embodiments, the carbonization treatment time is 0.5 hours, 1 hour, 1.5 hours, 2 hours, 2.5 hours, 3 hours, 5 hours, or a value within a range defined by any two of these values.

In some embodiments, the pre-carbonization and carbonization treatments are performed in an inert gas. In some embodiments, the inert gas includes nitrogen, helium, argon, or a mixed gas of the foregoing gases.

In some embodiments, the surface coating treatment method in the above hard carbon material preparation method may be high-temperature molten coating with pitch or fusible resin, spray coating with soluble resin, or high-temperature coating with a reducing gas. It should be noted that after coating with pitch, fusible resin, or soluble resin, further pyrolysis is required, with a pyrolysis temperature range of 700°C to 1300°C. The reducing gas may be methane, acetylene, cyclohexane, benzene, or toluene.

The material, composition, and manufacturing method of the positive electrode used in the electrochemical device of the present application may include any technology known in the prior art.

The positive electrode includes a positive electrode current collector and a positive electrode active material layer disposed on at least one surface of the positive electrode current collector, where the positive electrode active material layer includes a positive electrode active material. As an example, the positive electrode current collector has two opposing surfaces in its thickness direction, and the positive electrode active material layer is disposed on either one or both of the opposing surfaces of the positive electrode current collector.

In some embodiments, the positive electrode active material layer includes a positive electrode active material, and the specific type of the positive electrode active material is not particularly limited and may be selected according to requirements.

In some embodiments, the electrochemical device is a sodium-ion battery. The positive electrode active material may use positive electrode active materials known in the art for sodium-ion secondary batteries. As an example, the positive electrode active material may include one or more of sodium transition metal oxides, polyanionic compounds, or Prussian blue compounds.

As an example, the sodium transition metal oxide may include: Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, or Ba, 0 < x ≤ 0.33, 0 < h ≤ 0.24, 0 ≤ k ≤ 0.32, 0 < 1 ≤ 0.68, 0 ≤ m < 0.1, h + k + l + m = 1, and 0 ≤ y < 0.2; Na_{0.67}Mn_{0.7}Ni_{z}M²_{0.3-z}O₂, where M² is one or more of Li, Mg, Al, Ca, Ti, Fe, Cu, Zn, or Ba, and 0 < z ≤ 0.1; and NaₐLi_{b}Ni_{c}Mn_{d}FeₑO₂, where 0.67 < a ≤ 1, 0 < b < 0.2, 0 < c < 0.3, 0.67 < d + e < 0.8, and b + c + d + e = 1. As an example, the polyanionic compound may include: A¹_{f}M³_{g}(PO₄)ᵢOⱼX¹₃₋ⱼ, where A¹ is Na and one or more of H, Li, K, or NH₄, M³ is one or more of Ti, Cr, Mn, Fe, Co, Ni, V, Cu, or Zn, X¹ is one or more of F, Cl, or Br, 0 < f ≤ 4, 0 < g ≤ 2, 1 ≤ i ≤ 3, and 0 ≤ j ≤ 2; NaₙM⁴PO₄X², where M⁴ is one or more of Mn, Fe, Co, Ni, Cu, or Zn, X² is one or more of F, Cl, or Br, and 0 < n ≤ 2; NaₚM^{s}_{q}(SO₄)₃, where M⁵ is one or more of Mn, Fe, Co, Ni, Cu, or Zn, 0 < p ≤ 2, and 0 < q ≤ 2; and NaₛMnₜFe₃₋ₜ(PO₄)₂(P₂O₇), where 0 < s ≤ 4, and 0 ≤ t ≤ 3, for example, t is 0, 1, 1.5, 2, or 3.

As an example, the Prussian blue compound may include: A²ᵤM⁶ᵥ[M⁷(CN)₆]_{w}·xH₂O, where A² is Na and one or more of H⁺, NH₄⁺, other alkali metal cations, or alkaline earth metal cations, M⁶ and M⁷ are each independently one or more of transition metal cations, 0 < u ≤ 2, 0 < v ≤ 1, 0 < w ≤ 1, and 0 < x < 6. For example, A² is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, or Ra²⁺, and M⁶ and M⁷ are each independently one or more of cations of transition metal elements Ti, V, Cr, Mn, Fe, Co, Ni, Cu, Zn, Sn, or W. Preferably, A² is one or more of Li⁺, Na⁺, or K⁺, M⁶ is one or more of cations of transition metal elements Mn, Fe, Co, Ni, or Cu, and M⁷ is one or more of cations of transition metal elements Mn, Fe, Co, Ni, or Cu.

In some embodiments, the positive electrode active material layer optionally further includes a conductive agent. As an example, the conductive agent may include at least one of superconducting carbon, acetylene black, carbon black, Ketjen black, carbon dots, carbon nanotubes, graphene, or carbon nanofibers.

In some embodiments, the positive electrode active material layer optionally further includes a binder. As an example, the conductive agent may be selected from a carbon-based material, a metal-based material, a conductive polymer, or any combination thereof. As an example, the carbon-based material may be at least one selected from the group consisting of natural graphite, artificial graphite, superconducting carbon, acetylene black, carbon black, Ketjen black, carbon dots, carbon nanotubes, graphene, and carbon nanofibers. The metal-based material may be selected from metal powder or metal fibers. The conductive polymer may include a polyphenylene derivative.

In some embodiments, the positive electrode current collector may use a metal foil or a composite current collector. As an example of a metal foil, the positive electrode current collector may use aluminum foil. The composite current collector may include a polymer base layer and a metal material layer formed on at least one surface of the polymer base material. As an example, the metal material may be one or more selected from the group consisting of aluminum, aluminum alloy, nickel, nickel alloy, titanium, titanium alloy, silver, and silver alloy. As an example, the polymer base material may be selected from polypropylene, polyethylene terephthalate, polybutylene terephthalate, polystyrene, or polyethylene.

The positive electrode of the present application may be prepared according to conventional methods in the art. For example, the positive electrode active material layer is typically formed by coating a positive electrode slurry onto a positive electrode current collector, followed by drying and cold pressing. The positive electrode slurry is typically formed by dispersing the positive electrode active material, optional conductive agent, optional binder, and any other components in a solvent and stirring uniformly. The solvent may be N-methylpyrrolidone (NMP), but is not limited thereto.

The positive electrode of the present application optionally includes additional functional layers besides the positive electrode active material layer. For example, in some embodiments, the positive electrode of the present application further includes a conductive undercoating layer (for example, composed of a conductive agent and a binder) sandwiched between the positive electrode current collector and the positive electrode active material layer and disposed on the surface of the positive electrode current collector. In other embodiments, the positive electrode of the present application further includes a protective layer covering the surface of the positive electrode active material layer.

The electrolyte serves to conduct active ions between the positive electrode and the negative electrode. The electrolyte used in the electrochemical device of the present application may be an electrolyte known in the prior art.

In some embodiments, the electrolyte may include an organic solvent, an electrolyte salt, and an optional additive.

In some embodiments, the electrochemical device is a sodium-ion battery, and the electrolyte salt may include a sodium salt. As an example, the sodium salt may be at least one selected from the group consisting of NaPF₆, NaClO₄, NaBCl₄, NaSO₃CF₃, and Na(CH₃)C₆H₄SO₃. In some embodiments, a concentration of the sodium salt in the electrolyte is approximately 0.5 mol/L to 3 mol/L, approximately 0.5 mol/L to 2 mol/L, or approximately 0.8 mol/L to 1.5 mol/L.

In some embodiments, the electrochemical device is a lithium-ion battery, and the electrolyte salt may include a lithium salt. In some embodiments, the electrolyte includes, but is not limited to, inorganic lithium salts, such as LiClO₄, LiPF₆, LiBF₄, LiSbF₆, LiSO₃F, or LiN(FSO₂)₂; fluorinated organic lithium salts, such as LiCF₃SO₃, LiN(FSO₂)(CF₃SO₂), LiN(CF₃SO₂)₂, LiN(C₂F₅SO₂)₂, cyclic 1,3-hexafluoropropane disulfonimide lithium, cyclic 1,2-tetrafluoroethane disulfonimide lithium, LiN(CF₃SO₂)(C₄F₉SO₂), LiC(CF₃SO₂)₃, LiPF₄(CF₃)₂, LiPF₄(C₂F₅)₂, LiPF₄(CF₃SO₂)₂, LiPF₄(C₂F₅SO₂)₂, LiBF₂(CF₃)₂, LiBF₂(C₂F₅)₂, LiBF₂(CF₃SO₂)₂, LiBF₂(C₂F₅SO₂)₂; and lithium salts containing dicarboxylic acid complexes, such as lithium bis(oxalate)borate, lithium difluoro(oxalate)borate, lithium tris(oxalate)phosphate, lithium difluoro-bis(oxalate)phosphate, or lithium tetrafluoro(oxalate)phosphate. Additionally, the above electrolytes may be used alone or in combination of two or more. For example, in some embodiments, the electrolyte includes a combination of LiPF₆ and LiBF₄. In some embodiments, the electrolyte includes a combination of an inorganic lithium salt such as LiPF₆ or LiBF₄ with a fluorinated organic lithium salt such as LiCF₃SO₃, LiN(CF₃SO₂)₂, or LiN(C₂F₅SO₂)₂. In some embodiments, a concentration of the electrolyte is in the range of 0.8 mol/L to 3 mol/L, such as 0.8 mol/L to 2.5 mol/L, 0.8 mol/L to 2 mol/L, 1 mol/L to 2 mol/L, 0.5 mol/L to 1.5 mol/L, 0.8 mol/L to 1.3 mol/L, 0.5 mol/L to 1.2 mol/L, or for example, 1 mol/L, 1.15 mol/L, 1.2 mol/L, 1.5 mol/L, 2 mol/L, or 2.5 mol/L.

In some embodiments, the additive may include a negative electrode film-forming additive, a positive electrode film-forming additive, and additives that can improve certain battery performance, such as additives that improve overcharge performance, high-temperature performance, or low-temperature performance of the battery.

In addition to the fluorinated carbonate compounds and compounds containing sulfur-oxygen double bonds mentioned above, as an example, the additive may also include, but is not limited to, ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), or diethyl sulfone (ESE). The above organic solvents may be used alone or in combination of two or more. Optionally, two or more of the above organic solvents are used simultaneously.

The electrolyte may be prepared according to conventional methods in the art. For example, the organic solvent, electrolyte salt, and optional additive may be mixed evenly to obtain the electrolyte. The order of addition of the materials is not particularly limited. For example, the electrolyte salt and optional additive may be added to the organic solvent and then mixed evenly to obtain the electrolyte; alternatively, the electrolyte salt may be added to the organic solvent first, followed by the addition of the optional additive to the organic solvent and mixing evenly to obtain the electrolyte.

### Separator

The separator is disposed between the positive electrode and the negative electrode, primarily to prevent short-circuiting between the positive and negative electrodes while allowing active ions to pass through. The present application has no particular limitation on the type of separator, and any well-known porous structure separator with good chemical and mechanical stability may be used.

In some embodiments, the material of the separator may be one or more selected from the group consisting of glass fiber, non-woven fabric, polyethylene, polypropylene, and polyvinylidene fluoride, but is not limited thereto. Optionally, the material of the separator may include polyethylene and/or polypropylene. The separator may be a single-layer film or a multilayer composite film. When the separator is a multilayer composite film, the materials of the various layers may be the same or different. In some embodiments, the separator may also have a ceramic coating or a metal oxide coating.

In some embodiments, the positive electrode, the negative electrode, and the separator may be formed into an electrode assembly through a winding process or a lamination process.

The electrochemical device of the present application further includes an outer package for packaging the electrode assembly and the electrolyte. In some embodiments, the outer package may be a hard shell, such as a hard plastic shell, an aluminum shell, or a steel shell, or a soft pouch, such as a pouch-type soft package. The material of the soft pouch may be plastic, such as at least one of polypropylene (PP), polybutylene terephthalate (PBT), or polybutylene succinate (PBS).

The present application has no particular limitation on the shape of the electrochemical device, which may be cylindrical, square, or any other shape. The positive electrode, the negative electrode, and the separator may be formed into an electrode assembly through a winding process or a lamination process. The electrode assembly is packaged in the electrochemical device. The number of electrode assemblies contained in the electrochemical device may be one or more, and those skilled in the art may select according to specific practical needs.

The preparation process of the electrochemical device is well known to those skilled in the art, and the present application has no particular limitation. For example, a lithium-ion battery or a sodium-ion battery may be manufactured through the following process: the positive electrode and negative electrode are stacked with a separator in between, and after operations such as winding or folding as needed, they are placed into a casing, the electrolyte is injected into the casing, and the casing is sealed. Additionally, overcurrent prevention elements, guide plates, and the like may be placed in the casing as needed to prevent pressure buildup, overcharge, or overdischarge inside the sodium-ion or lithium-ion battery.

The following takes a sodium-ion battery as an example and describes the preparation of a sodium-ion battery in conjunction with specific embodiments. Those skilled in the art will understand that the preparation methods described in the present application are merely examples, and any other suitable preparation methods are within the scope of the present application.

### Examples

The following describes the performance evaluation of sodium-ion batteries according to examples and comparative examples of the present application.

### I. Preparation of sodium-ion battery

### 1. Preparation of negative electrode

### A. Preparation of hard carbon material (negative electrode active material)

The hard carbon materials in Examples 1-1 to 1-7, Examples 1-15 to 1-20, and Comparative Example 1-1 were prepared as follows:
100 g of high-temperature pitch with a softening point of approximately 240°C and 10 g of potassium tartrate template agent were added to a reactor, heated to 250°C, and stirred to melt and mix the precursor material with the template agent, to obtain a mixed precursor material. After cooling to room temperature, the mixed precursor material was crushed to a Dᵥ50 of 8µm to 15 µm to obtain a powder of the precursor material. The powder was then reloaded into the reactor, heated to 200°C, and maintained at that temperature, with a mixed gas of oxygen and nitrogen (with oxygen accounting for 10% by volume) introduced at a rate of 200 ml/min for 180 minutes to perform oxidation treatment on the precursor powder. During the oxidation treatment, the reactor needed to be kept stirring, to obtain an oxidized precursor material.

The oxidized precursor material was placed in a tube furnace, heated to 600°C, and maintained for 2 hours for pre-carbonization treatment, with a heating rate of 2°C/min and an atmosphere of 10 L/min nitrogen, to obtain a pre-carbonized material. The pre-carbonized material was crushed and placed in a 1 mol/L hydrochloric acid solution, heated to 100°C, and stirred for 12 hours to obtain a pre-pyrolyzed carbon solution. The pre-pyrolyzed carbon solution was washed multiple times with water and filtered until its pH was neutral, then filtered and dried again to obtain pre-pyrolyzed carbon. 50 g of the pre-pyrolyzed carbon was placed in a tube furnace, heated to 1200°C, and maintained at that temperature for 2 hours for carbonization treatment, with a heating rate of 4°C/min and an atmosphere of 10 L/min nitrogen, to obtain a carbonized material. The carbonized material was classified to obtain a precursor hard carbon material with a Dᵥ50 of 5.2 µm and a Dᵥ90 of 13.2 µm.

50 g of the precursor hard carbon material was placed in a rotary furnace with a 1 L inner volume, heated to 750°C under a 0.5 L/min nitrogen atmosphere, which was then changed to a 0.5 L/min ethylene-argon mixed gas (with ethylene accounting for 10% by volume), and maintained at that temperature for 10 hours to perform surface coating on the precursor hard carbon material, to obtain the desired hard carbon material.

The hard carbon materials in Examples 1-8 to 1-11 were prepared as follows: the coating treatment times in the coating step were 16 hours, 8 hours, 4 hours, and 2 hours, respectively, with the remaining conditions consistent with the preparation process of Example 1-1.

The hard carbon materials in Examples 1-12 to 1-14 were prepared as follows: the oxidation treatment times for the precursor powder were 150 minutes, 300 minutes, and 60 minutes, respectively, with the remaining conditions consistent with the preparation process of Example 1-1.

The hard carbon material in Comparative Example 1-2 was prepared as follows: the oxidation treatment time for the precursor powder was 60 minutes, the coating treatment time in the coating step was 16 hours, and after the coating treatment, the material was placed in a tube furnace, heated to 900°C, and maintained at that temperature for 2 hours for secondary carbonization treatment, with a heating rate of 4°C/min and an atmosphere of 10 L/min nitrogen. The remaining conditions were consistent with the preparation process of Example 1-1.

The hard carbon material in Comparative Example 1-3 was prepared as follows: the coating treatment time in the coating step was 16 hours, and after the coating treatment, the material was placed in a tube furnace, heated to 1000°C, and maintained at that temperature for 2 hours for secondary carbonization treatment, with a heating rate of 4°C/min and an atmosphere of 10 L/min nitrogen. The remaining conditions were consistent with the preparation process of Example 1-1.

The hard carbon materials in Examples 2-1 to 2-10 were prepared as follows: the carbonized material was classified to obtain materials with corresponding Dᵥ50 and Dᵥ90 values, with the remaining conditions consistent with the preparation process of Example 1-2.

B. The hard carbon material (negative electrode active material), a binder styrene-butadiene rubber, and sodium carboxymethyl cellulose (CMC-Na) were dissolved at a weight ratio of 97:1.5:1.5 in deionized water to prepare a negative electrode slurry (solid content of 40wt%). A 10 µm thick aluminum foil was used as the negative electrode current collector, and the negative electrode slurry was applied onto the negative electrode current collector with a single-sided coating thickness of 50 µm, dried at 85°C, then subjected to cold pressing, cutting, and slitting, and dried under vacuum at 120°C for 12 hours to obtain the negative electrode.

### 2. Preparation of positive electrode

The positive electrode active material NaNi_{7/20}Fe_{7/20}Mn_{3/10}O₂, conductive carbon black (Super P), and polyvinylidene fluoride (PVDF) were mixed at a weight ratio of 97:1.4:1.6, N-methylpyrrolidone (NMP) was added as a solvent, and the resulting solution was stirred evenly to obtain a positive electrode slurry (solid content of 72wt%). The positive electrode slurry was evenly applied onto an aluminum foil positive electrode current collector with a coating thickness of 80 µm, dried at 85°C, then subjected to cold pressing, cutting, and slitting, and dried under vacuum at 85°C for 4 hours to obtain the positive electrode.

### 3. Preparation of electrolyte

Ethylene carbonate (EC), propylene carbonate (PC), and diethyl carbonate (DEC) were mixed at a mass ratio of 1:1:1 to obtain an organic solvent. NaPF₆ was dissolved in the organic solvent, and fluoroethylene carbonate (FEC) and/or a compound containing a sulfur-oxygen double bond was added and mixed evenly to obtain the electrolyte. Based on the total mass of the electrolyte, the mass percentage of NaPF₆ was 12.5%. The mass percentages of fluoroethylene carbonate (FEC) and the compound containing a sulfur-oxygen double bond are shown in Table 1. m% is the sum of the mass percentages of the fluorinated carbonate compound and the compound containing a sulfur-oxygen double bond.

### 4. Preparation of separator

A 7 µm thick polyethylene (PE) was used as the separator.

### 5. Preparation of sodium-ion battery

The positive electrode, separator, and negative electrode were stacked in sequence and wound to obtain an electrode assembly 52. The electrode assembly 52 was placed in an outer package, the above electrolyte was injected, and after packaging, standing, formation, and shaping processes, a sodium-ion battery was obtained. The designed voltage range of the sodium-ion battery was 2.0 V to 4.53 V.

### II. Performance testing methods for sodium-ion battery

### 1. Testing method for ID/IG value of hard carbon material

In the present application, the ratio ID/IG of the hard carbon material has a meaning well known in the art and can be measured by methods known in the art. For example, Raman spectroscopy was used, and a laser micro-confocal Raman spectrometer was employed to test the surface defect degree of the sample. An area of 100 µm × 100 µm was taken from the negative electrode active material layer, and a laser micro-confocal Raman spectrometer (Raman, HR Evolution, HORIBA Scientific Instruments Division) was used to scan the particles within this area to obtain the peak D and peak G of all particles in this area. The LabSpec software was used to process the data to obtain the peak intensities of the D peak and G peak for each particle, denoted as ID and IG, respectively. The laser wavelength of the Raman spectrometer may be in the range of 532 nm to 785 nm. The value of ID/IG in this document is the average of the ratios ID/IG of all particles measured within this range. Peak D is generally near 1350 ± 50 cm⁻¹, caused by the radial breathing mode of symmetric stretching vibration of sp2 carbon atoms in aromatic rings (structural defects). Peak G appears near 1580 ± 50 cm⁻¹, caused by the stretching vibration between sp2 carbon atoms. In the present application, the value of ID/IG is denoted as d.

### 2. Testing method for crystal plane spacing d002 of hard carbon material

The X-ray diffraction pattern of the hard carbon material has a meaning well known in the art and is measured using an X-ray powder diffractometer. An X-ray powder diffractometer (XRD, model: Bruker D8 ADVANCE) was used to test the negative electrode active material graphite, with a Cu Kα target; the voltage and current were 40 kV and 40 mA, respectively, the scanning angle range was 5° to 80°, the scanning step size was 0.00836°, and the time per step was 0.3 s. Further, according to Bragg's law, 2dsinθ = λ (where d is the crystal plane spacing), thus d002 = λ/(2sinθ), where θ is the angle of the maximum peak intensity of the 002 peak.

### 3. Testing method for content of components in electrolyte

The components and their contents in the electrolyte can be measured according to conventional methods in the art. For example, the components and their contents in the electrolyte could be detected using gas chromatography-mass spectrometry (GC-MS), ion chromatography (IC), liquid chromatography (LC), or the like.

### 4. Testing method for pore diameter and pore volume of hard carbon material

The pore structure on the surface of the hard carbon material can be measured by methods known in the art. For example, it could be tested using an ASAP2460 physical adsorption analyzer. Specifically, the negative electrode active material powder was dried and degassed, then tested using the ASAP2460 physical adsorption analyzer with nitrogen as the test atmosphere. Different test pressures were adjusted to measure the adsorption amount of nitrogen, and adsorption and desorption isotherms were plotted. The shape of the pores was determined according to the shape of the hysteresis loop, and the DFT model was used for fitting to obtain the pore diameter distribution curve of the micropores in the active material, thereby obtaining the content and pore diameter information of externally connected micropores.

### 5. Testing method for particle size of hard carbon material

The volume median particle size Dᵥ50 and the particle size Dᵥ90 of the hard carbon material have meanings well known in the art, indicating that 50% and 90% of the particles in the volume-based particle size distribution are smaller than these values, respectively, and can be measured by methods known in the art. For example, they could be measured according to GB/T 19077-2016 Particle Size Analysis-Laser Diffraction Methods using a laser particle size analyzer (for example, Malvern Mastersizer 2000E). Further, the ratio Dᵥ90/Dᵥ50 can be determined.

### 6. Testing method for compacted density at 5 tons pressure of hard carbon material

For the test standard, refers to GB/T 24533-2009 "Graphite Negative Electrode Materials for Lithium-Ion Batteries." The specific test method is as follows: 1.0000 ± 0.0500 g of the negative electrode active material sample was weighed and placed in a test mold (CARVER #3619 (13 mm)). The sample was then placed in the test equipment, where the test equipment was SUNS UTM7305 with a test tonnage of 5.0 tons, a pressure increase rate of 10 mm/min, a pressure holding time of 30 s, a pressure release rate of 30 mm/min, and a pressure release holding time of 10 s. The compacted density was measured after pressure release, and the compacted density was calculated as: compacted density = mass of negative electrode active material / stressed area of negative electrode active material / thickness of negative electrode active material.

### 7. Testing method for specific surface area of hard carbon material

The specific surface area of the hard carbon material has a meaning well known in the art and can be measured by methods known in the art. For example, the specific surface area of the negative electrode active material could be measured using a specific surface area analyzer (Tristar II 3020M) through nitrogen adsorption/desorption methods.

### 8. Testing method for compacted density of negative electrode active material layer

The compacted density of the negative electrode active material layer has a meaning well known in the art and can be measured by methods known in the art. For example, an electronic balance was used to weigh a processed negative electrode (with negative electrode active material layers coated on both sides of the negative electrode current collector) with an area of S, the weight was recorded as W₁, and the thickness of the negative electrode was measured using a micrometer, recorded as T₁. The negative electrode active material layer was washed off using a solvent, dried, and the weight of the negative electrode current collector was measured, recorded as W₂, with the thickness of the negative electrode current collector measured using a micrometer, recorded as T₂. The compacted density PD of the negative electrode active material layer on one side of the negative electrode current collector was calculated as: PD = (W₁ - W₂) / [(T₁ - T₂) S].

### 9. Testing Method for Porosity of Negative Electrode Active Material Layer

Samples of the negative electrode active material layer were prepared as complete circular pieces, with five samples tested for each example or comparative example, each sample having a volume of approximately 0.35 cm³. The porosity of the negative electrode active material layer was tested in accordance with the standard GB/T 24586-2009 " Iron Ores-Determination of Apparent Density, True Density, and Porosity," with helium as the test gas.

### 10. Testing method for specific capacity and initial coulombic efficiency of negative electrode active material

The specific capacity and initial coulombic efficiency of the negative electrode active material have meanings well known in the art and can be measured by methods known in the art. For example, the hard carbon material was mixed with an appropriate amount of binder, conductive agent, and solvent to prepare a uniform negative electrode slurry. The negative electrode slurry was applied onto the surface of a negative electrode current collector to obtain a negative electrode. A metallic sodium sheet was used as the counter electrode, and a coin cell was assembled with the negative electrode. The coin cell was subjected to charge-discharge cycles with a test mode of constant current discharge-constant voltage discharge-constant current charge. The first desodiation capacity obtained from the test was the specific capacity of the active material, and the initial coulombic efficiency was obtained by dividing the first desodiation capacity by the first sodiation capacity. Further, at a current density of 0.05C, the coin cell was charged and discharged in the constant current discharge-constant voltage discharge-constant current charge mode, and the ratio of 0.05C constant current sodiation capacity to the total sodiation capacity was equal to test capacity of the constant current discharge part / (test capacity of the constant current discharge part + test capacity of the constant voltage discharge part).

### 11. Testing method for rate performance of sodium-ion battery

Five sodium-ion batteries were taken for each group, subjected to repeated charging and discharging through the following steps, and the capacity (average value) of each charging stage was recorded to calculate the CC stage capacity ratio.

Specific steps: First, the sodium-ion battery was placed in a 25°C environment for 1 hour. The battery was charged at a 3C rate with constant current (CC) until the rated voltage was reached, then switched to constant voltage (CV) for charging, and charging was stopped when the charging current was below 0.05C, followed by a 5-minute rest. The battery was then discharged at a 0.2C rate to the rated voltage, rested for five minutes to ensure the integrity of the subsequent charge-discharge process. The 3C charge capacity retention rate was calculated as: 3C charge capacity retention rate = [CC stage charge capacity / (CC + CV) total charge capacity] × 100%.

### 12. Testing method for 45°C cycling performance of sodium-ion battery

The test battery was rested for five minutes at a test temperature of 45°C, charged and discharged at a current of 1.0C within the designed voltage range, and the first recorded discharge capacity was denoted as D0. The above charge-discharge process was repeated 1000 times, and the final discharge capacity was recorded as D1. After cycling at 45°C, the capacity retention rate was D1/D0, with the unit being %.

### 13. Testing method for low-temperature charge-discharge performance of sodium-ion battery

At 25°C, the sodium-ion battery was charged at 0.02C to the rated voltage, then discharged at 0.02C to the rated voltage, and the discharge capacity was recorded as A0. The temperature was then lowered to -20°C, and after maintaining at that temperature for 1 hour, the sodium-ion battery was charged at 0.02C to the rated voltage at -20°C, then discharged at 0.02C to the rated voltage, and the discharge capacity was recorded as A1. The discharge capacity retention rate at -20°C was A1/A0.

### 14. Testing method for electrolyte retention (liquid retention) of sodium-ion battery

In the present application, the electrolyte retention, that is, electrolyte retention value, of the electrochemical device was obtained by dividing the mass of the electrolyte in the electrochemical device by the 0.2C discharge capacity of the electrochemical device.

It should be noted that, in the present application, tests for various parameters of the negative electrode active material or negative electrode active material layer can be conducted by sampling during the battery preparation process or from a prepared electrochemical device.

When the test samples are taken from a sodium-ion battery that has undergone multiple charge-discharge cycles, as an example, sampling can be performed according to the following steps (1) to (3):
(1) The sodium-ion battery (generally, the battery was in a fully discharged state for safety) was discharged; the battery was disassembled to remove the negative electrode, the negative electrode was soaked in dimethyl carbonate (DMC) for a certain period (for example, 2 hours to 10 hours); then the negative electrode was removed and dried at a certain temperature and time (for example, 60°C for 4 hours). After drying, the negative electrode was taken out, and the dried negative electrode could be sampled to test the parameters related to the negative electrode active material layer described in the present application.
(2) The dried negative electrode from step (1) was baked at a certain temperature and time (for example, 400°C for 2 hours), any area on the baked negative electrode was selected, and the negative electrode active material was sampled (for example., by scraping with a blade).
(3) The negative electrode active material collected in step (2) was sieve (for example, using a 200-mesh sieve) to obtain samples suitable for testing the parameters of the negative electrode active material described in the present application.

### III. Test results

The parameters and test data for Examples 1-1 to 1-20 and Comparative Examples 1-1 to 1-3 are shown in Table 1.

**Table 1**

| | Fluorinated carbonate compound | | Compound containing sulfur-oxygen double bond | | m% | d | m/d | d002 crystal plane spacing (nm) | Specific capacity (mAh/g) | Discharge capacity retention rate at -20°C (%) | Constant current sodiation capacity/total sodiation capacity ratio at 0.05C (%) | 3C charge capacity retention rate (%) | 45°C cycle capacity retention rate (%) |
|---|---|---|---|---|---|---|---|---|---|---|---|---|---|
| | Type | Mass percentage (%) | Type | Mass percentage (%) | | | | | | | | | |
| Example 1-1 | | 1 | | 0 | 1 | 1.25 | 0.80 | 0.38 | 361 | 88 | 88 | 89 | 90 |
| Example 1-2 | | 3 | | 0 | 3 | 1.25 | 2.40 | 0.38 | 385 | 89 | 92 | 92 | 93 |
| Example 1-3 | | 5 | | 0 | 5 | 1.25 | 4.00 | 0.38 | 371 | 88 | 91 | 88 | 92 |
| Example 1-4 | | 0 | | 0.05 | 0.05 | 1.25 | 0.04 | 0.38 | 363 | 87 | 87 | 89 | 87 |
| Example 1-5 | | 0 | | 2 | 2 | 1.25 | 1.60 | 0.38 | 367 | 88 | 93 | 91 | 92 |
| Example 1-6 | | 0 | | 4 | 4 | 1.25 | 3.20 | 0.38 | 374 | 88 | 89 | 88 | 87 |
| Example 1-7 | Fluoroethylene carbonate | 3 | 1,3-propane sultone | 1.5 | 4.5 | 1.25 | 3.60 | 0.38 | 380 | 91 | 91 | 91 | 92 |
| Example 1-8 | | 3 | | 1.5 | 4.5 | 1.00 | 4.50 | 0.38 | 365 | 87 | 87 | 91 | 87 |
| Example 1-9 | | 3 | | 1.5 | 4.5 | 1.20 | 3.75 | 0.38 | 368 | 87 | 87 | 91 | 88 |
| Example 1-10 | | 3 | | 1.5 | 4.5 | 1.30 | 3.46 | 0.38 | 385 | 88 | 89 | 88 | 90 |
| Example 1-11 | | 3 | | 1.5 | 4.5 | 1.40 | 3.21 | 0.38 | 357 | 89 | 94 | 91 | 91 |
| Example 1-12 | | 3 | | 1.5 | 4.5 | 1.25 | 3.60 | 0.37 | 372 | 87 | 88 | 89 | 90 |
| Example 1-13 | | 3 | | 1.5 | 4.5 | 1.25 | 3.60 | 0.39 | 368 | 91 | 92 | 92 | 93 |
| Example 1-14 | | 3 | | 1.5 | 4.5 | 1.25 | 3.60 | 0.40 | 381 | 90 | 93 | 92 | 91 |
| Example 1-15 | Difluoroethylene carbonate | 3 | / | / | 3 | 1.25 | 2.4 | 0.38 | 382 | 89 | 90 | 85 | 90 |
| Example 1-16 | / | / | Propenyl-1,3-sultone | 2 | 2 | 1.25 | 1.60 | 0.38 | 370 | 88 | 87 | 87 | 88 |
| Example 1-17 | / | / | 1,2-propane sultone | 2 | 2 | 1.25 | 1.60 | 0.38 | 364 | 86 | 89 | 87 | 85 |
| Example 1-18 | / | / | vinyl sulfate | 2 | 2 | 1.25 | 1.60 | 0.38 | 368 | 86 | 89 | 90 | 87 |
| Example 1-19 | Fluoroethylene carbonate | 0 | 1,3-propane sultone | 5 | 5 | 1.25 | 4.00 | 0.38 | 370 | 85 | 85 | 86 | 84 |
| Example 1-20 | | 3 | | 1.5 | 4.5 | 1.25 | 3.60 | 0.38 | 364 | 83 | 85 | 86 | 88 |
| Comparative Example 1-1 | | 0 | | 0 | 0 | 1.25 | 0.00 | 0.38 | 373 | 83 | 83 | 80 | 70 |
| Comparative Example 1-2 | | 3 | | 1.5 | 4.5 | 0.95 | 4.74 | 0.36 | 330 | 70 | 72 | 75 | 74 |
| Comparative Example 1-3 | | 3 | | 1.5 | 4.5 | 0.85 | 5.29 | 0.38 | 310 | 82 | 84 | 81 | 81 |

| | | | | | | | | | | | | | |
|---|---|---|---|---|---|---|---|---|---|---|---|---|---|
| "/" indicates that the substance was not added. | | | | | | | | | | | | | |

From the comparison of Examples 1-1 to 1-20 with Comparative Example 1-1, it can be seen that, compared to sodium-ion batteries where the electrolyte does not contain the fluorinated carbonate compound or compound containing sulfur-oxygen double bonds, sodium-ion batteries with electrolytes containing the fluorinated carbonate compound and/or compound containing sulfur-oxygen double bonds exhibit improved high-temperature cycling performance, low-temperature performance, and rate performance while maintaining the specific capacity of the negative electrode active material.

From the comparison of Examples 1-1 to 1-20 with Comparative Examples 1-2 and 1-3, it can also be seen that when d ranges from 1.0 to 1.6 and m/d ranges from 0.01 to 4.5, sodium-ion batteries exhibit improved high-temperature cycling performance, low-temperature performance, and rate performance while maintaining the specific capacity of the negative electrode active material. The effect is even more pronounced when m/d ranges from 1.6 to 3.6 and/or d ranges from 1.2 to 1.4.

When the crystal plane spacing d002 of the hard carbon material ranges from 0.37 nm to 0.41 nm, it helps further improve the high-temperature cycling performance, low-temperature performance, and rate performance of sodium-ion batteries while maintaining the specific capacity of the negative electrode active material. The effect is even more pronounced when the crystal plane spacing d002 ranges from 0.38 nm to 0.40 nm.

The parameters and test data for Examples 2-1 to 2-10 are shown in Tables 2 and 3, respectively. Except for the parameters in Tables 2 and 3, the settings for Examples 2-1 to 2-10 are consistent with those of Example 1-2.

**Table 2**

| | Dᵥ50 of hard carbon material (µm) | Dᵥ90 of hard carbon material (µm) | Dᵥ90/Dᵥ50 | Specific surface area of hard carbon material (m²/g) | Compacted density at 5 tons pressure of hard carbon material (g/cc) | Pore diameter of hard carbon material (nm) | Pore volume of hard carbon material (cc/g) |
|---|---|---|---|---|---|---|---|
| Example 1-2 | 5.2 | 13.2 | 2.5 | 3.1 | 1.05 | 0.9 | 0.01 |
| Example 2-1 | 2.6 | 6.6 | 2.5 | 8.3 | 1.15 | 0.9 | 0.02 |
| Example 2-2 | 8.0 | 20.7 | 2.6 | 1.9 | 0.97 | 0.9 | 0.01 |
| Example 2-3 | 9.8 | 24.9 | 2.5 | 1.7 | 0.95 | 0.9 | 0.01 |
| Example 2-4 | 5.8 | 11.9 | 2.0 | 2.5 | 1.00 | 0.9 | 0.01 |
| Example 2-5 | 5.5 | 16.6 | 3.0 | 2.8 | 0.97 | 0.9 | 0.01 |
| Example 2-6 | 5.9 | 27.5 | 4.7 | 2.4 | 0.94 | 0.9 | 0.01 |
| Example 2-7 | 1.0 | 2.6 | 2.6 | 11.9 | 1.03 | 0.9 | 0.03 |
| Example 2-8 | 12.0 | 30.5 | 2.5 | 1.5 | 0.86 | 0.9 | 0.01 |
| Example 2-9 | 5.1 | 7.7 | 1.5 | 5.6 | 0.90 | 0.9 | 0.01 |
| Example 2-10 | 5.0 | 40.5 | 8.1 | 2.4 | 0.89 | 0.9 | 0.01 |

**Table 3**

| | Porosity of negative electrode active material layer (%) | Compacted density of negative electrode active material layer (g/cc) | Specific capacity (mAh/g) | Initial coulombic efficiency (%) | Electrolyte retention (g/Ah) |
|---|---|---|---|---|---|
| Example 1-2 | 38 | 1.00 | 385 | 92.0 | 6.0 |
| Example 2-1 | 37 | 1.09 | 375 | 87.3 | 5.9 |
| Example 2-2 | 39 | 0.93 | 377 | 92.4 | 6.1 |
| Example 2-3 | 38 | 0.90 | 384 | 92.5 | 6.0 |
| Example 2-4 | 34 | 0.95 | 377 | 92.2 | 5.6 |
| Example 2-5 | 45 | 0.93 | 382 | 92.1 | 6.7 |
| Example 2-6 | 56 | 0.91 | 381 | 92.2 | 7.8 |
| Example 2-7 | 45 | 0.90 | 360 | 84.4 | 6.4 |
| Example 2-8 | 63 | 0.83 | 340 | 91.4 | 8.3 |
| Example 2-9 | 43 | 0.92 | 364 | 86.6 | 6.9 |
| Example 2-10 | 62 | 0.84 | 347 | 90.3 | 8.1 |

The results show that appropriate particle size distribution, specific surface area, compacted density, pore diameter, pore volume, thickness, and porosity of the hard carbon material can result in a suitable range of electrolyte retention for sodium-ion batteries, further improving the initial coulombic efficiency of the negative electrode active material, enhancing the performance of sodium-ion batteries, and maintaining the specific capacity of the negative electrode active material.

Throughout the specification, references to "some embodiments," "certain embodiments," "one embodiment," "another example," "example," "specific example," or "some examples" mean that at least one embodiment or example of the present application includes the specific feature, structure, material, or characteristic described in that embodiment or example. Thus, descriptions appearing throughout the specification, such as "in some embodiments," "in embodiments," "in one embodiment," "in another example," "in one example," "in a specific example," or "for example," do not necessarily refer to the same embodiment or example in the present application. Furthermore, the specific features, structures, materials, or characteristics herein may be combined in any suitable manner in one or more embodiments or examples.

Although illustrative embodiments have been shown and described, those skilled in the art should understand that the above embodiments are not to be construed as limiting the present application, and changes, substitutions, and modifications may be made to the embodiments without departing from the spirit, principles, and scope of the present application.

## Claims

1. An electrochemical device, comprising a positive electrode, a negative electrode, and an electrolyte; wherein
the electrolyte comprises an additive, wherein the additive comprises a first additive M, the first additive M is at least one selected from the group consisting of a fluorinated carbonate compound and a compound containing a sulfur-oxygen double bond; and based on a mass of the electrolyte, a mass percentage of the first additive M is m%;
the negative electrode comprises a negative electrode active material layer, wherein the negative electrode active material layer comprises a negative electrode active material, and the negative electrode active material comprises a hard carbon material;
as measured by Raman spectroscopy, a peak intensity of the hard carbon material at 1300 cm⁻¹ to 1400 cm⁻¹ is ID, a peak intensity of the hard carbon material at 1550 cm⁻¹ to 1650 cm⁻¹ is IG, a ratio of ID/IG is d, and d ranges from 1.0 to 1.6; and
m/d ranges from 0.01 to 4.5.

2. The electrochemical device according to claim 1, wherein the electrochemical device satisfies at least one of the following conditions:
(1) m/d ranges from 1.6 to 3.6; or
(2) d ranges from 1.2 to 1.4.

3. The electrochemical device according to claim 1, wherein, as measured by X-ray diffraction, a crystal plane spacing d002 of the hard carbon material ranges from 0.37 nm to 0.41 nm.

4. The electrochemical device according to claim 1, wherein the electrochemical device satisfies at least one of the following conditions:
(1) based on the mass of the electrolyte, a mass percentage of the fluorinated carbonate compound ranges from 0.05% to 5%; or
(2) based on the mass of the electrolyte, a mass percentage of the compound containing a sulfur-oxygen double bond ranges from 0.05% to 4%.

5. The electrochemical device according to claim 3, wherein the crystal plane spacing d002 ranges from 0.38 nm to 0.40 nm.

6. The electrochemical device according to claim 1, wherein the compound containing a sulfur-oxygen double bond comprises at least one of 1,3-propane sultone, propenyl-1,3-sultone, 1,2-propane sultone, 1,4-butane sultone, or vinyl sulfate, and/or the fluorinated carbonate compound comprises at least one of fluoroethylene carbonate or difluoroethylene carbonate.

7. The electrochemical device according to claim 1, wherein the hard carbon material has pores, a pore diameter of the pores ranges from 0.6 nm to 2.0 nm; and, as measured by nitrogen adsorption, a pore volume of the pores is less than 0.05 cc/g.

8. The electrochemical device according to claim 1, wherein the hard carbon material satisfies at least one of the following conditions:
(1) a specific surface area of the hard carbon material ranges from 0.5 m²/g to 10 m²/g;
(2) a compacted density of the hard carbon material under a pressure of 5 tons ranges from 0.8 g/cc to 1.6 g/cc;
(3) as measured by X-ray diffraction, the hard carbon material has a diffraction peak in a range of 18° to 30°, and a full width at half maximum of the diffraction peak ranges from 4° to 12°; or
(4) Dᵥ50 of the hard carbon material ranges from 2 µm to 10 µm, and Dᵥ50 and Dᵥ90 of the hard carbon material satisfy: 2 ≤ Dᵥ90/Dᵥ50 ≤ 5.

9. The electrochemical device according to claim 1, wherein the negative electrode active material layer satisfies at least one of the following conditions:
(1) a porosity of the negative electrode active material layer ranges from 30% to 60%; or
(2) a compacted density of the negative electrode active material layer ranges from 0.8 g/cc to 1.5 g/cc.

10. The electrochemical device according to claim 1, wherein:
a capacity per unit area of the negative electrode active material layer is V1;
the positive electrode comprises a positive electrode active material layer, and a capacity per unit area of the positive electrode active material layer is V2; and
V1/V2 ranges from 1.1 to 1.5.

11. The electrochemical device according to claim 1, wherein the electrochemical device is a sodium-ion battery.

12. An electronic device, comprising the electrochemical device according to any one of claims 1 to 11.
